# EUROPÄISCHE PATENTSCHRIFT

(11) **EP 1 523 392 B1**
(45) Veröffentlichungstag und Bekanntmachung des Hinweises auf die Patenterteilung: **10.05.2006**
(21) Anmeldenummer: 03766139.4
(22) Anmeldetag: 09.07.2003
(51) Int. Cl.: B23B 31/20

(54) **SPANNEINRICHTUNG FÜR WERKZEUGE**
CLAMPING DEVICE FOR TOOLS
DISPOSITIF DE SERRAGE POUR OUTILS

(30) Priorität: 24.07.2002 DE 10234603
(43) Veröffentlichungstag der Anmeldung: 20.04.2005
(73) Patentinhaber: Hainbuch GmbH Spannende Technik, 71672 Marbach (DE)
(72) Erfinder: RALL, Gerhard, 71672 Marbach (DE)
(74) Vertreter: Patentanwälte Ruff, Wilhelm, Beier, Dauster & Partner
(86) Internationale Anmeldenummer: PCT/EP2003/007384
(87) Internationale Veröffentlichungsnummer: WO 2004/012892

(56) Entgegenhaltungen:
- DE-A- 2 831 140
- US-A- 4 867 463
- US-A- 5 096 213

## Beschreibung

### Anwendungsgebiet und Stand der Technik

Die Erfindung betrifft eine Spanneinrichtung für Werkzeuge oder Werkstücke, beispielsweise Bohrer oder Fräser, gemäß dem Oberbegriff des Anspruchs 1.

Derartige Spanneinrichtungen sind seit langem bekannt, beispielsweise aus der DE 28 31 140. Hierbei werden mehrere Spannbacken durch eine axiale Bewegung entlang einer kegeligen Fläche in radialer Richtung näher zueinander geführt. Dadurch kann ein Werkzeug oder ein Werkstück eingespannt werden. Vielfach besteht hierbei das Problem, dass bei Werkzeugen oder Werkstücken, die nur am äußeren Ende des Spannkopfes mit einem kurzen Abschnitt eingespannt werden können, ein Kippen der Spannbacken auftreten kann. Dies führt zum einen zu einer unrunden und zum anderen zu einer unsicheren Einspannung.

### Aufgabe und Lösung

Der Erfindung liegt die Aufgabe zugrunde, eine eingangs genannte Spanneinrichtung zu schaffen, mit der die Probleme des Standes der Technik vermieden werden können, insbesondere eine sichere Einspannung in den Spannbacken erzielt werden kann.

Diese Aufgabe wird gelöst durch eine Spanneinrichtung mit den Merkmalen des Anspruchs 1. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Erfindungsgemäß wird also bei einer Spanneinrichtung, wie sie im Oberbegriff des Anspruchs 1 beschrieben ist, ein Abstützelement vorgesehen. Dieses kann in den verjüngten Bereich des Spannkopfteils eingebracht werden. Dabei kann es den Spannkopfteil in der erweiterten Stellung halten, insbesondere blockieren. Durch dieses Halten oder Blockieren kann eine Verengung oder ein Abkippen der Spannbacken von der Längsachse, welches zu einem Auskuppeln aus der Kupplungsvorrichtung führen würde, vermieden werden. Somit kann durch das Abstützelement die Aufrechterhaltung des eingekoppelten Zustandes gesichert werden. Außerdem bleiben die Spannbacken und somit die Spannflächen in der gewünschten Stellung zum sicheren Einspannen eines Werkzeugs oder Werkstücks.

Das Abstützelement kann in einem Inndurchgang, welcher durch den Spannkopfteil verläuft, im Bereich der Kupplungsvorrichtung angeordnet sein. Dies weist den Vorteil auf, dass das Sichern des eingekuppelten Zustandes möglichst im Bereich der Kupplungsvorrichtung erfolgt. Besonders vorteilhaft ist das Abstützelement in axialer Richtung gesehen in etwa auf Höhe, insbesondere radial innerhalb, der Kupplungsvorrichtung angeordnet. Dabei kann vorgesehen sein, dass das Abstützelement mit dem Spannrohrteil verbunden werden kann. Eine solche Verbindung kann beispielsweise als Schraubverbindung mit einer Spann- oder Befestigungsschraube ausgebildet sein.

In weiterer Ausgestaltung der Erfindung kann das Abstützelement den Spannkopfteil in die erweiterte Stellung auseinander spreizen, also bewegen. Dabei kann hier eine Bewegung des Abstützelements in axialer Richtung vorgesehen sein. Eine solche Bewegung kann in Richtung auf das Spannrohrteil zu erfolgen. Hierbei ist vorteilhaft vorgesehen, dass das Abstützelement in Bewegungsrichtung verjüngt ausgebildet ist. Besonders vorteilhaft ist hier eine konische Verjüngung. Der vorgenannte Innendurchgang durch den Spannkopfteil kann eine der Form des Abstützelementes entsprechend ausgebildete Innenschräge, insbesondere korrespondierend zu einem konischen Abstützelement, aufweisen. Diese Innenschräge kann als Führung für das Abstützelement dienen. So kann durch Bewegen des Abstützelements in axialer Richtung auch das Spannkopfteil zum Spannrohrteil hin erweitert oder gespreizt und somit die Kupplung hergestellt werden.

Die Schraube verläuft vorteilhaft entlang der Längsachse. Sie kann mit einer Werkzeugangriffsfläche, beispielsweise einem Innensechskant, durch den Raum oder den Innendurchgang zwischen den Spannflächen erreichbar sein, vorteilhaft von der Vorderseite des Spannkopfteils aus.

Es kann vorgesehen sein, dass das Abstützelement in einem Raum zwischen den Spannbacken gelagert ist, und zwar vorteilhaft unverlierbar. Dabei sollte eine axiale Bewegbarkeit aufrechterhalten bleiben. Eine solche unverlierbare Lagerung weist den Vorteil auf, dass bei Bewegen oder Transport des Spannkopfteils das Abstützelement nicht verloren gehen kann. Besonders vorteilhaft ist es so gelagert, dass es ohne größere Einstellung oder Bewegung an das Spannrohrteil angeschraubt werden kann, also insbesondere in etwa lagerichtig gelagert ist.

Bei einer Ausgestaltung der Erfindung ist der Spannkopfteil mittels der Kupplungsvorrichtung in axialer Richtung relativ zu dem Spannrohrteil bewegbar ausgebildet. Durch die Führung bzw. das Anliegen der schrägen Außenflächen des Spannkopfteils an entsprechend ausgebildeten schrägen Innenflächen des Spannrohrteils kann dabei der Spannkopfteil in radialer Richtung verengt werden. Somit bewegen sich die Spannbacken und auch die Spannflächen zum Einspannen eines Werkzeugs oder Werkstücks in radialer Richtung aufeinander zu. Dadurch kann mittels der Kupplungsvorrichtung ein Einspannen erreicht werden. Vorteilhaft ist die Kupplungsvorrichtung so ausgebildet, dass auch die gegenläufige Bewegung, also ein Öffnen der Spannbacken zum Ausspannen, möglich ist.

Der Spannkopfteil kann von seiner Außenform her konusförmig ausgebildet sein und entsprechende schräge, abgerundete Außenflächen aufweisen. Vorteilhaft ist der Spannrohrteil entsprechend konisch ausgebildet mit schrägen Innenflächen, wobei hier besonders vorteilhaft ein flächiger Kontakt gegeben ist. Der Spannkopfteil kann direkt an dem Spannrohrteil anliegen bzw. an diesem abgestützt sein und daran entlang laufen.

Der Winkel der Abschrägung des Spannkopfteils kann dem Winkel der Abschrägung des Abstützelementes entsprechen. Dies weist den Vorteil auf, dass beim Bewegen des Spannkopfteils in axialer Richtung der Spannkopfteil bzw. die Spannbacken zwischen den somit parallelen Schrägen der Innenfläche des Spannrohrteils und der Außenfläche des Abstützelements entlang laufen. So kann ein Verkippen der Spannbacken in radialer Richtung von der Längsachse weg oder zu ihr hin vermieden werden. Die Bewegung der Spannbacken entspricht somit einer exakten Parallelverschiebung. Die Spannflächen der Spannbacken bleiben dabei parallel zueinander, wodurch ein sicheres Einspannen entlang einer möglichst großen Länge möglich ist. Vorteilhaft ist vorgesehen, dass die Innenfläche des Spannrohrteils und die Außenfläche des Abstützelements in axialer Richtung einen gewissen Abstand aufweisen, besonders vorteilhaft an entgegengesetzten End-Abschnitten des Spannkopfteils anliegen. Diese End-Abschnitte können auf den Bereich bezogen sein, der in dem Spannrohrteil verläuft. So ist ein gutes Hebelverhältnis gegen Abkippen der Spannbacken erreichbar.

Die Verbindungsmittel zwischen den Spannbacken des Spannkopfteils können einerseits elastisch ausgebildet sein. Als vorteilhaft wird hier eine gummielastische Masse angesehen. Die Verbindungsmittel sind dabei vorzugsweise mit den Spannbacken unlösbar verbunden, beispielsweise durch Vulkanisieren oder Kleben. Die Elastizität der Verbindungsmittel kann zum einen durch das entsprechende Material erreicht werden. Alternativ oder zusätzlich dazu kann mittels einer speziellen Formgebung für die Verbindungsmittel die Elastizität beeinflusst oder gesteigert werden. Hierfür können beispielsweise Ausnehmungen, Öffnungen oder Durchbrüche in den Verbindungsmitteln vorgesehen sein.

Andererseits ist es möglich, die Verbindungselemente für eine Bewegbarkeit nicht elastisch, sondern beispielsweise gelenkig auszubilden. Schließlich ist es möglich, den Spannkopfteil bzw. die Spannbacken durch eine vorgenannte Parallelführung in der eingekuppelten Stellung so exakt zu führen, dass die Verbindungsmittel im wesentlichen lediglich ein Auseinanderfallen der einzelnen Teile des Spannkopfteils im ausgebauten Zustand bewirken sollen. Wie vorstehend ausgeführt, kann mittels der Spannmittel der Spannkopfteil in der verengten Stellung gehalten werden.

Die Verbindungsmittel können dazu dienen, die Spannbacken überhaupt zu einer Einheit zusammenzuhalten. Des weiteren kann vorteilhaft vorgesehen sein, dass der Spannkopfteil durch die Verbindungsmittel, insbesondere deren Formgebung, in einer Stellung vorliegt, welche als Grundstellung ohne Krafteinwirkung gegeben ist. Dies bedeutet, dass ohne Einwirkung von außen der Spannkopfteil in dieser Grundstellung vorliegt. Vorteilhaft ist diese Grundstellung die verengte Stellung, in welcher der Spannkopfteil ohne größere Verformung in den Spannrohrteil eingeführt werden kann, um dann die Kupplungsvorrichtung zu schließen.

Des weiteren können Spannmittel, vorzugsweise elastische Spannmittel vorgesehen sein, welche den Spannkopfteil in einer vorgegebenen Stellung halten. Diese vorgegebene Stellung ist vorteilhaft die vorgenannte verengte Stellung als Grundstellung. Die Spannmittel können dabei einen elastischen Ring, insbesondere einen Gummiring, aufweisen. Dieser Ring kann im verjüngten Bereich des Spannkopfteils umlaufend angeordnet sein, beispielsweise in eine entsprechende Nut oder Ausnehmung in der Stirnseite eingelegt sein. Mittels dieser Spannmittel wird der Spannkopfteil zusätzlich zu der vorbeschriebenen Möglichkeit des Erreichens der verengten Stellung durch die Verbindungsmittel in einer Stellung, vorzugsweise der verengten Stellung, gehalten.

Nach dem Einführen des Spannkopfteils in das Spannrohrteil kann durch das Abstützelement eine Aufweitung des Spannkopfteils bzw. der Spannbacken entgegen dem Widerstand der Verbindungsmittel und/oder der Spannmittel erreicht werden. In Abweichung vom bekannten Stand der Technik werden dadurch bei der üblichen Verwendung der Spanneinrichtung, nämlich in der aufgeweiteten und eingekuppelten Stellung des Spannkopfteils, die Verbindungsmittel und/oder die Spannmittel gespannt gehalten. Dies kann zwar auf Dauer zu einer Ermüdung der Verbindungsmittel oder Spannmittel führen. Durch Austauschen derselben kann dieses Problem jedoch beseitigt werden, ohne größeren Aufwand.

Besonders hervorzuheben ist bei der Erfindung, dass bei einer vorgenannten Ausbildung der Spanneinrichtung mit einer verengten Grundstellung des Spannkopfteils sowie der Parallelführung von dem Gedanken abgewichen wird, dass der Spannkopfteil ohne äußeren Krafteinfluss in der Form vorliegen sollte, die er nachher im Einsatz der Spanneinrichtung aufweist. Das Abstützelement übernimmt sowohl die Funktion der Herstellung der Kupplung mit der Kupplungsvorrichtung als auch einer Führung der Spannbacken zur Vermeidung eines radialen Verkippens.

Diese und weitere Merkmale gehen außer aus den Ansprüchen auch aus der Beschreibung und den Zeichnungen hervor.

### Kurzbeschreibung der Zeichnungen

Ausführungsbeispiele der Erfindung sind in den Zeichnungen schematisch dargestellt und wird im folgenden näher erläutert. In den Zeichnungen zeigen:
- Fig. 1: einen Schnitt durch eine Spanneinrichtung bestehend aus einem Spannrohrteil sowie einem zum Einführen bereiten, nach vorne verengten Spannkopfteil mit einem darin gelagerten Abstützelement,
- Fig. 2: die Spanneinrichtung aus Fig. 1, wobei der Spannkopfteil in das Spannrohrteil eingeführt ist,
- Fig. 3: die Spanneinrichtung aus Fig. 1, bei der der Spannkopfteil im Vergleich zu Fig. 2 durch Anschrauben des Abstützelements aufgeweitet und mit der Kupplungsvorrichtung verbunden ist,
- Fig. 4: eine Draufsicht auf den Spannkopfteil nach Fig. 3 mit gerade ausgerichteten Spannbacken und
- Fig. 5: eine Außenansicht des Spannkopfteils in der verengten Stellung, welche die Grundstellung ist.

### Detaillierte Beschreibung der Ausführungsbeispiele

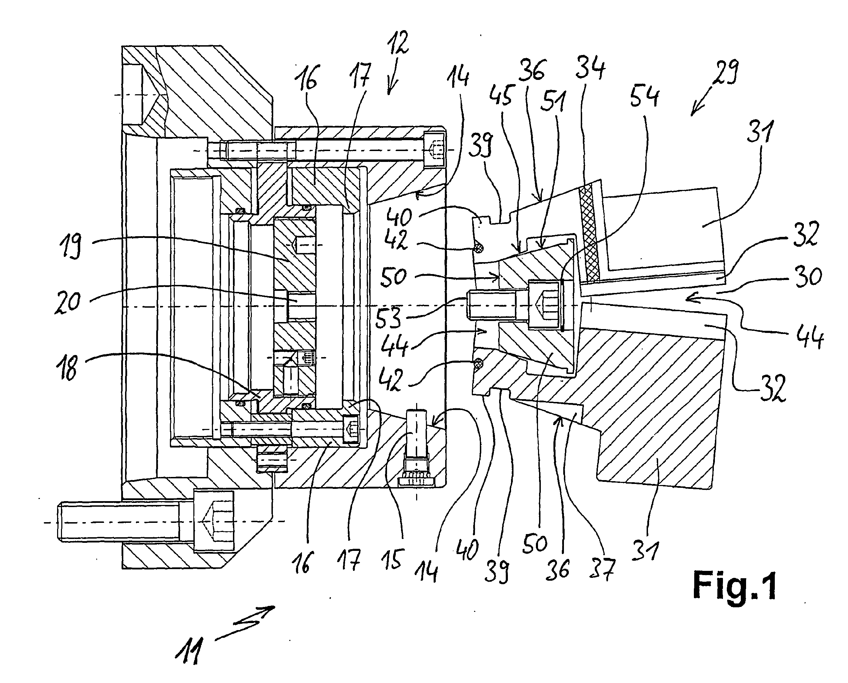

In Fig. 1 ist im Schnitt eine Spanneinrichtung 11 dargestellt, in welcher Werkzeuge, wie beispielsweise Bohrer oder Fräser, ebenso aber auch Werkstücke, welche bearbeitet werden sollen, eingespannt werden können. Die Spanneinrichtung 11 weist links einen Spannrohrteil 12 und rechts einen Spannkopfteil 29 auf.

Der Spannrohrteil 12 ist im Prinzip ähnlich aufgebaut wie aus dem Stand der Technik bekannt. Er weist in seinem vorderen Bereich schräge Innenflächen 14 auf. Dabei sind die Innenflächen 14 konusförmig. Unten ragt eine Schraube 15 durch eine Innenfläche 14. Deren Funktion wird später genauer erläutert.

Des weiteren befindet sich im Innenraum des Spannrohrteils 12 eine Kupplungsvorrichtung 16 für den Spannkopfteil 29. Die Kupplungsvorrichtung 16 weist einen umlaufenden, nach innen stehenden Vorsprung 17 auf. Des weiteren ist nach links zu eine Zugbetätigungsvorrichtung 18 vorgesehen. Mit dieser kann die Kupplungsvorrichtung 16 entlang der strichpunktierten Längsmittelachse bewegt werden.

Innerhalb der Kupplungsvorrichtung 16 und im Gegensatz dazu nicht beweglich, sondern ortsfest angeordnet, befindet sich eine Befestigungsplatte 19. Sie weist ein zentrisch verlaufendes Gewinde 20 auf. Während die Kupplungsvorrichtung 16 also nach links oder rechts bewegt werden kann, bleibt die Befestigungsplatte 19 stets an derselben Stelle innerhalb des Spannrohrteils.

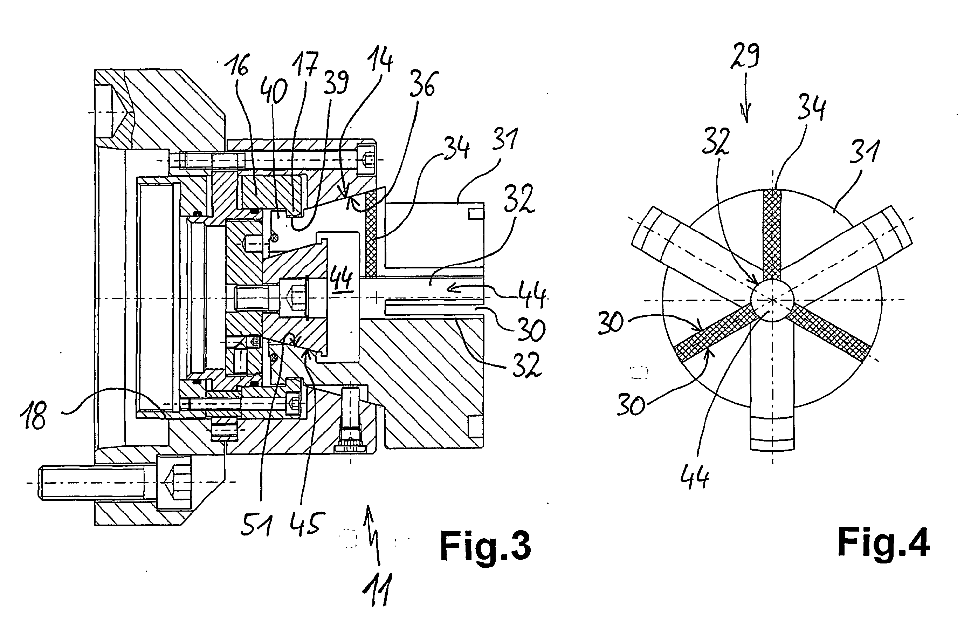

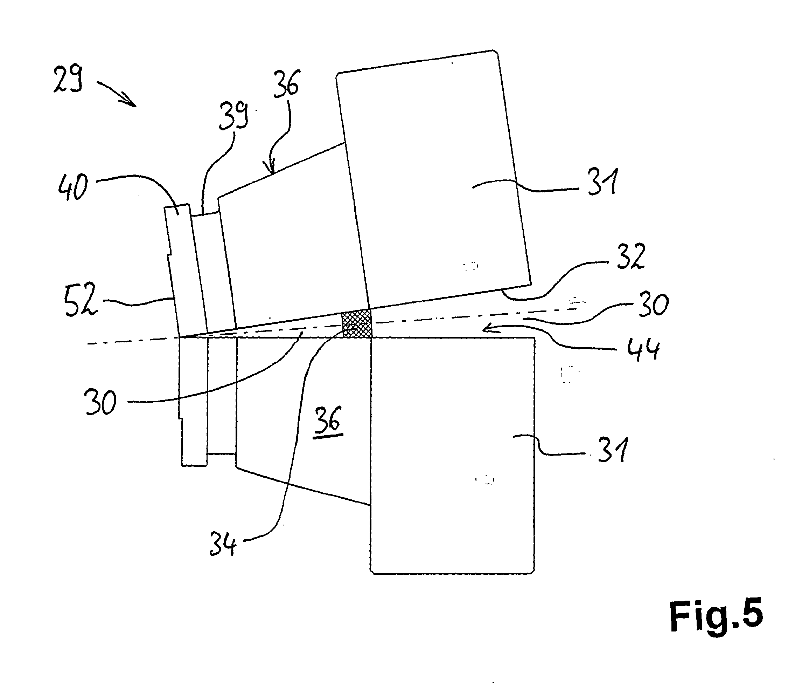

Der Spannkopfteil 29 ist ebenso im Prinzip ähnlich wie beim Stand der Technik aufgebaut. Er weist in radialer Richtung und in axialer Richtung durchgehende Längsschlitze 30 auf. Durch diese ist er in drei Spannbacken 31 aufgeteilt. Dies geht besonders gut auch aus den Fig. 4 und 5 hervor. Die Spannbacken 31 weisen an ihrer Innenseite Spannflächen 32 auf. Die Spannflächen 32 sind, wie insbesondere aus Fig. 3 und 4 hervorgeht, in der erweiterten Stellung des Spannkopfteils 29 für den Betrieb am Einspannen eines Werkzeugs parallel zueinander. Insbesondere liegen sie sämtlich auf einer zylindrischen Mantelfläche.

Verbunden sind die drei Spannbacken 31 mittels eines elastischen Verbindungsgummis 34 als Verbindungselement, welcher in einem relativ kleinen Bereich streifenförmig verläuft. Dies kann wiederum besonders gut aus den Fig. 4 und 5 entnommen werden. Die Verbindungsgummis 34 sind an den Spannbacken 31 angeklebt bzw. anvulkanisiert. Anstelle solcher befestigten, in sich elastischen Verbindungsmittel können auch gelenkige Verbindungsmittel, beispielsweise mit einem Scharnier, verwendet werden.

Der Spannkopfteil 29 bzw. die Spannbacken 31 weisen eine Außenfläche 36 auf. Die Außenfläche 36 ist jeweils so ausgebildet, dass sie in der erweiterten Stellung des Spannkopfteils 29 gemäß Fig. 3 eine konische Form ergeben. Des weiteren ist in der unteren Außenfläche 36 ein Schlitz 37 vorgesehen. Dieser dient dazu, dass, wie aus Fig. 3 zu ersehen ist, die Schraube 15 darin eingreift und so eine Verdrehsicherung schafft. Sie bildet eine formschlüssige Einleitung eines Drehmomentes in den Spannkopfteil. Des weiteren kann mit dieser Verdrehsicherung bei Werkstücken, welche einen nicht kreisrunden Querschnitt aufweisen, die Orientierung der Spindel sichergestellt werden.

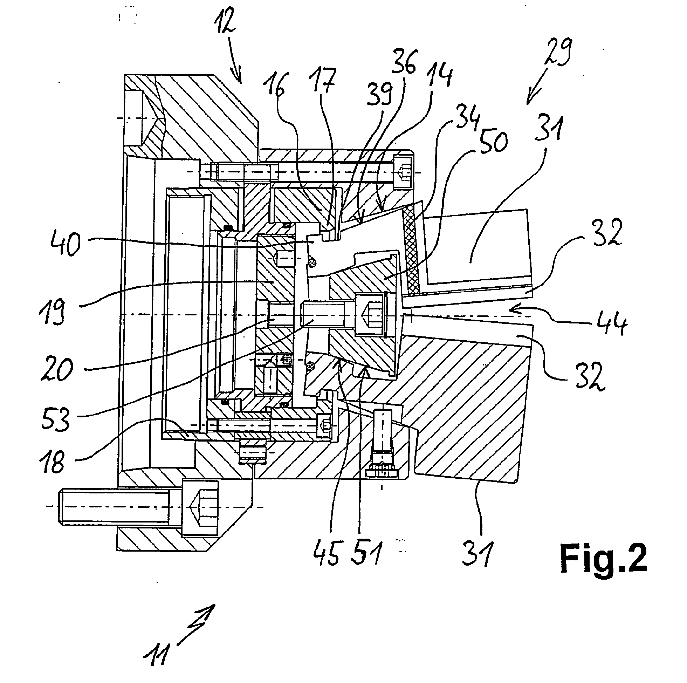

Nach links zu schließt an die Außenflächen 36 eine umlaufende Nut 39 an. Links davon wiederum ist ein umlaufender Vorsprung 40 angesehen. Der Vorsprung 40 greift, wie aus den Fig. 2 und 3 ersichtlich wird, beim Aufweiten des Spannkopfteils 29 hinter den Vorsprung 17 der Kupplungsvorrichtung 16. Dabei liegt der Vorsprung 17 in der Nut 39. So wird der Spannkopfteil 29 mit der Kupplungsvorrichtung 16 verbunden und eine formschlüssige Verbindung in axialer Richtung erzielt. Somit kann über die Kupplungsvorrichtung 16 eine Kraft und Bewegung in den Spannkopfteil 29 eingeleitet werden.

In der nach links weisenden Stirnseite des Spannkopfteils 29 bzw. der Spannbacken 31 ist in einer umlaufenden Nut ein Gummiring 42 eingelegt. Durch diesen Gummiring 42 wird zusätzlich zu der Verbindung der Spannbacken 31 mit den Verbindungsgummis 34 nach Fig. 5 die verengte Stellung der Spannbacken nach links zu erreicht. Nur mit einer speziellen Form der Verbindungsgummis 34 ist wegen der großen Masse der Spannbacken 31 sowie der ungünstigen Hebeverhältnisse ein Zusammenhalten schwer möglich. Mit einem in die Stirnseite eingelegten Gummiring 42, der bei Aufweiten des Spannkopfteils leicht gedehnt werden kann, ist dies dagegen sehr gut möglich.

In einem Innendurchgang 44 durch den Spannkopfteil 29 entlang der Längsmittelachse sind innere Führungsschrägen 45 an den Spannbacken 31 vorgesehen. Diese Führungsschrägen 45 bilden in der aufgeweiteten Stellung des Spannkopfteils 29 nach Fig. 3 eine Konusfläche.

Des weiteren ist in dem Innendurchgang 44 in dem Raum innerhalb der Führungsschrägen 45 ein Abstützelement 50 vorgesehen. Dieses Abstützelement 50 ist konusförmig nach Art eines Kegelstumpfes ausgebildet und massiv. Die Konusform wird dabei durch eine äußere Abschrägung 51 erreicht. Nach links zu weist das Abstützelement 50 eine flache Stirnseite 52 auf. Entlang seiner Mittelachse verläuft durch eine entsprechende Bohrung eine Befestigungsschraube 53. Diese ist in dem Abstützelement 50 gegen ein Herausfallen durch einen Sicherungsring 54 gesichert.

Des weiteren kann man aus Fig. 1 entnehmen, dass das Abstützelement 50 in dem Spannkopfteil 29 bzw. in dem Raum des Innendurchgangs 44 unverlierbar gehalten ist. Ebenso ist es so gehalten, dass es nicht seine Stellung oder Ausrichtung ändern kann.

In der Stellung des Spannkopfteils 29 nach Fig. 1 ist die verengte Stellung dargestellt. Wie im Vergleich mit Fig. 5 erkannt werden kann, ist dies die maximal verengte Stellung, da die Spannbacken 31 mit ihrem linken Ende bereits aneinander anliegen. Somit wird der Spannkopfteil 29 in den Spannrohrteil 12 eingeführt, wie es Fig. 2 darstellt. Dies ist leicht von Hand möglich. Dabei fahren die nach innen gedrückten Vorsprünge 40 des Spannkopfteils 29 an den Vorsprüngen 17 vorbei. Der Spannkopfteil 29 kann, wie in Fig. 2 zu erkennen ist, leicht ohne größeren Kraftaufwand so weit in den Spannrohrteil 12 eingeschoben werden, bis die Außenflächen 36 der Spannbacken 31 an dem rechten Ende der Innenflächen 14 des Spannrohrteils 12 anliegen.

Danach kann entweder mit etwas mehr Kraft der Spannkopfteil 29 weiter hineingedrückt werden, bis die Vorsprünge 40 hinter den Vorsprüngen 17 liegen. Alternativ kann mit einem Sechskantschlüssel die Befestigungsschraube 53 in das Gewinde 20 eingeschraubt werden, wobei hierzu bei der Darstellung nach Fig. 2 eine Bewegung nach links entlang der Längsmittelachse erforderlich ist. Sobald die Befestigungsschraube 53 in das Gewinde 20 greift, zieht sie das Abstützelement 50 gegen die Befestigungsplatte, also ebenfalls nach links. Dabei drückt die äußere Abschrägung 51 gegen die inneren Führungsschrägen 45 der Spannbacken 31 und bewirkt eine Bewegung der Spannbacken in radialer Richtung nach außen. Aufgrund der Verbindungsgummis 34 wird dabei eine gewisse Schwenkbewegung der Spannbacken 31 um diese Verbindungsgummis herum erfolgen. Die genaue Form dieser Bewegung ist jedoch nachrangig. Wichtig ist, dass die Spannbacken 31 vor allem im linken Bereich radial nach außen bewegt werden. Dadurch greifen die Vorsprünge 40 hinter die Vorsprünge 17 der Kupplungsvorrichtung 16 derart, dass die Vorsprünge 17 in die Nuten 39 einfahren. So wird die Verbindung mit der Kupplungsvorrichtung geschlossen.

Das Abstützelement 50 wird dabei so weit eingeschraubt, dass es mit seiner Stirnseite 52 an der Befestigungsplatte 19 anliegt, wie es Fig. 3 zeigt. Eine weitere Bewegung des Abstützelements 50 ist nicht mehr nötig und auch nicht mehr möglich.

Des weiteren kann aus Fig. 3 entnommen werden, dass in dieser Stellung der Spannkopfteil 29 aufgeweitet ist. Die Schrägen der Abschrägung 51, der Führungsschrägen 45, der Außenflächen 36 sowie der Innenflächen 14 sind sämtlich entsprechend ausgebildet, weisen also den gleichen Winkel zur Längsmittelachse auf. So bilden die Innenflächen 14 sowie die äußere Abschrägung 51 eine Art verkippungssichere Parallelführung für die Spannbacken 31 mit den Außenflächen 36 und den inneren Führungsschrägen 45.

In dieser aufgeweiteten Stellung ist der Gummiring 42 gedehnt. Des weiteren sind die Verbindungsgummis 34 verformt, und können bereichsweise unter Zug- oder Druckspannung stehen. Dies spielt jedoch keine große Rolle. Aufgrund ihrer Elastizität können sie dieses ausgleichen.

Durch Bewegen der Kupplungsvorrichtung 16 nach links mit der Zugvorrichtung 18 werden die Spannbacken 31 mehr zu der Befestigungsplatte 19, also weiter in den Spannrohrteil 12 hinein, bewegt. Bei diesem Bewegen der Spannbacken 31 weiter in den Spannrohrteil 21 hinein fahren sie entsprechend dem Winkel der schrägen Konusflächen radial nach innen. Damit kann die Einspannung eines Werkstücks zwischen den Spannflächen 32 erreicht werden. Selbst wenn ein Werkstück lediglich am äußersten rechten Ende der Spannflächen 32 eingespannt wird, was normalerweise zu einem Auseinanderkippen der Spannbacken nach außen führen würde, wird dies durch das Abstützelement 50 verhindert. Die Spannbacken 31 werden durch die Abschrägung 51 des Abstützelements 50 sowie die Innenflächen 14 des Spannrohrteils 12 immer exakt parallel zur Längsmittelachse gehalten.

Der große Vorteil der Ausbildung sämtlicher schrägen Konusflächen mit demselben Winkel liegt also darin, dass die Spannbacken 31 zwischen den Innenflächen 14 und den äußeren Abschrägungen 51 in axialer Richtung bewegt werden können. So können sie sich radial annähern, ohne dabei jedoch abzukippen. Das Abstützelement 50 selber bleibt dabei ortsfest.

In weiterer Ausgestaltung der Erfindung wäre es möglich, die Befestigung des Abstützelements 50 an der Befestigungsplatte 19 zu variieren. Anstelle einer Schraubverbindung kann hier auch eine Art Schnellverschluss vorgesehen sein.

Des weiteren ist es möglich, anstelle eines Spannkopfteils 29 mit drei Spannbacken 31 noch mehr Spannbacken vorzusehen, beispielsweise fünf oder sieben.

Die Spanneinrichtung 11 ist so ausgebildet, dass Werkstücke oder Werkzeuge mit einem Durchmesser in einem gewissen Bereich eingespannt werden können. Dieser Durchmesserbereich ergibt sich durch den möglichen Längsverstellungsbereich der Spannbacken 31. Dadurch ergibt sich im Zusammenhang mit dem Winkel der Konusform eine gewisse Änderung im Durchmesser. Ebenso kann eine Spanneinrichtung geschaffen werden, welche lediglich für einen einzuspannenden Durchmesser ausgelegt ist.

Aus den Fig. 4 und 5 wird noch einmal deutlich, wie die Verbindungsgummis 34 zwischen den Spannbacken 31 angeordnet sind. Sie sollten, wie Fig. 5 zeigt, in Längsrichtung des Spannkopfteils 29 nicht besonders lang ausgedehnt, sondern eher punktförmig sein. Ansonsten wäre die geforderte Verformung zu groß, und die Verbindungsgummis 34 könnten beschädigt werden oder von den Spannbacken 31 zumindest teilweise abreißen. Dies sollte vermieden werden.

## Patentansprüche

1. Spanneinrichtung (11) für Werkzeuge, insbesondere Bohrer oder Fräser, mit einem Spannrohrteil (12) und einem darin anordenbaren Spannkopfteil (29), wobei der Spannkopfteil auf seiner Innenseite Spannflächen (32) für die Werkzeuge aufweist und in Richtung auf die Spanneinrichtung zu eine verjüngte Form aufweist mit schrägen Außenflächen (36), die an entsprechend schrägen Innenflächen (14) des Spannrohrteils (12) geführt sind und wobei der Spannkopfteil durch am Umfang verteilt angeordnete, in radialer Richtung und in axialer Richtung durchgehende Längsschlitze (30) in einzelne Spannbacken (31) aufgeteilt ist, die mit Verbindungsmitteln (34) verbunden sind, welche eine Bewegung erlauben, vorzugsweise elastischen Verbindungsmitteln, wobei der Spannkopfteil und der Spannrohrteil mittels einer in axialer Richtung formschlüssigen und in radialer Richtung lösbaren Kupplungsvorrichtung (16) an der Außenseite des Spannkopfteils miteinander gekuppelt sind, wobei der Spannkopfteil in Folge der eine Bewegung erlaubenden Verbindungsmittel zumindest in dem verjüngten Bereich in seinem Außenumfang veränderbar ist von einer erweiterten Stellung, in der die Kupplungsvorrichtung (16) eingekuppelt ist, in eine verengte Stellung, in der der Spannkopfteil aus der Kupplungsvorrichtung ausgekuppelt ist, **gekennzeichnet durch** wenigstens ein Abstützelement (50), das in den verjüngten Bereich des Spannkopfteils (29) bringbar ist und den Spannkopfteil in der erweiterten Stellung blockiert hält zur Vermeidung einer Verengung oder eines Abkippens der Spannbacken (31) von der Längsachse.

2. Spanneinrichtung nach Anspruch 1, **dadurch gekennzeichnet, dass** das Abstützelement (50) in einem Innendurchgang (44) des Spannkopfteils (29) im Bereich der Kupplungsvorrichtung (16) angeordnet ist, wobei vorzugsweise das Abstützelement mit dem Spannrohrteil (12) verbindbar ist.

3. Spanneinrichtung nach Anspruch 1 oder 2, **dadurch gekennzeichnet, dass** das Abstützelement (50) durch eine Bewegung in axialer Richtung, vorzugsweise auf das Spannrohrteil (12) zu, den Spannkopfteil (29) auseinander spreizt in die erweiterte Stellung, wobei dazu das Abstützelement in Bewegungsrichtung verjüngt ist, und der Innendurchgang (44) des Spannkopfteils eine entsprechende Innenschräge (45) zur Führung aufweist.

4. Spanneinrichtung nach einem der vorhergehenden Ansprüche, **dadurch gekennzeichnet, dass** das Abstützelement (50) mit einer Schraube (53), insbesondere entlang der Längsachse, an das Spannrohrteil (12) schraubbar ist, wobei vorzugsweise die Schraube durch den Raum (44) zwischen den Spannflächen (32) erreichbar ist von der Vorderseite des Spannkopfteils (29) aus.

5. Spanneinrichtung nach einem der vorhergehenden Ansprüche, **dadurch gekennzeichnet, dass** das Abstützelement (50) in einem Raum (44) zwischen den Spannbacken (31) unverlierbar gelagert ist, wobei es vorzugsweise zumindest axial bewegbar ist.

6. Spanneinrichtung nach einem der vorhergehenden Ansprüche, **dadurch gekennzeichnet, dass** der Spannkopfteil (29) mittels der Kupplungsvorrichtung (16) in axialer Richtung relativ zu dem Spannrohrteil (12) bewegbar ist, wobei durch die Führung oder das Anliegen der schrägen Außenflächen (51) des Spannkopfteils an den entsprechend schrägen Innenflächen (45) des Spannrohrteils der Spannkopfteil verengt wird in radialer Richtung und somit die Spannflächen (32) verengt werden zum Einspannen eines Werkzeugs in den Spannbacken (31).

7. Spanneinrichtung nach einem der vorhergehenden Ansprüche, **dadurch gekennzeichnet, dass** der Spannkopfteil (29) Konusform hat mit entsprechend ausgebildeten schrägen Außenflächen (36), wobei vorzugsweise der Spannrohrteil (12) entsprechend konisch ausgebildete schräge Innenflächen (14) aufweist und der Spannkopfteil direkt an dem Spannrohrteil anliegt.

8. Spanneinrichtung nach einem der vorhergehenden Ansprüche, **dadurch gekennzeichnet, dass** der Winkel der Abschrägung (36) des Spannkopfteils (29) dem Winkel der Abschrägung (51) des Abstützelements (50) entspricht, wobei beim Bewegen des Spannkopfteils in axialer Richtung der Spannkopfteil bzw. die Spannbacken (31) zwischen den parallelen Schrägen der Innenfläche (14) des Spannrohrteils (12) und der Außenfläche (51) des Abstützelements laufen ohne ein Verkippen in radialer Richtung von der Längsachse weg oder zu ihr hin.

9. Spanneinrichtung nach einem der vorhergehenden Ansprüche, **dadurch gekennzeichnet, dass** die eine Bewegung erlaubenden Verbindungsmittel (34) elastisch sind, insbesondere eine gummielastische Masse, die zwischen die Spannbacken (31) vulkanisiert ist zur elastischen und unlösbaren Verbindung.

10. Spanneinrichtung nach einem der vorhergehenden Ansprüche, **dadurch gekennzeichnet, dass** der Spannkopfteil (31) mittels der Verbindungsmittel (34) in einer Stellung als Grundstellung ohne Krafteinwirkung vorliegt, wobei vorzugsweise diese Grundstellung die verengte Stellung ist.

11. Spanneinrichtung nach einem der vorhergehenden Ansprüche, **gekennzeichnet durch** elastische Spannmittel (42), die den Spannkopfteil (29) in einer vorgegebenen Stellung halten, insbesondere der verengten Stellung, wobei sie vorzugsweise einen elastischen Gummiring (42) aufweisen, der im verjüngten Bereich des Spannkopfteils umlaufend angeordnet ist.

## Claims

1. Clamping mechanism (11) for tools, in particular drills or milling cutters, with a clamping tube part (12) and a clamping head part (29) which can be placed therein, the clamping head part having on its inside clamping surfaces (32) for the tools and in the direction of the clamping mechanism a tapered shape with sloping outer surfaces (36), which are guided on corresponding, sloping inner surfaces (14) of the clamping tube part (12) and the clamping head part is subdivided into individual clamping jaws (31) by circumferentially distributed radially and axially through elongated slots (30) and which are connected to connecting means (34), preferably elastic connecting means, which allow a movement, the clamping head part and the clamping tube part being coupled to one another by means of an axially positive and radially releasable coupling device (16) on the outside of the clamping head part, whose outer circumference can be modified, at least in the tapered area, as a consequence of the movement-permitting connecting means, from a widened position in which the coupling device (16) is coupled into a narrowed position in which the clamping head part is uncoupled from the coupling device, **characterised by** at least one support element (50), which can be brought into the tapered area of the clamping head part (29) and keeps the clamping head part locked in the widened position to avoid a narrowing or tilting of the clamping jaws (31) from the longitudinal axis.

2. Clamping mechanism according to claim 1, **characterised in that** the support element (50) is located in an inner passage (44) of the clamping head part (29) in the vicinity of the coupling device (16), wherein the support element can preferably be connected to the clamping tube part (12).

3. Clamping mechanism according to either claim 1 or claim 2, **characterised in that** the support element (50) by an axial movement, preferably towards the clamping tube part (12), spreads apart the clamping head part (29) into the expanded position and for this purpose the support element is tapered in the movement direction and the inner passage (44) of the clamping head part has a corresponding inner bevel (45) for guidance purposes.

4. Clamping mechanism according to any one of the preceding claims, **characterised in that** the support element (50) can be screwed to the clamping tube part (12) by a screw (53), in particular along the longitudinal axis, wherein the screw can preferably be reached from the front of the clamping head part (29) through the space (44) between the clamping surfaces (32).

5. Clamping mechanism according to any one of the preceding claims, **characterised in that** the support element (50) is undetachably mounted in a space (44) between the clamping jaws (31) and is preferably at least axially movable.

6. Clamping mechanism according to any one of the preceding claims, **characterised in that** the clamping head part (29) can be moved axially relative to the clamping tube part (12) by means of the coupling device (16) and through the guidance or engagement of the sloping outer surfaces (51) of the clamping head part on the corresponding sloping inner surfaces (45) of the clamping tube part, the clamping head part is radially narrowed and consequently the clamping surfaces (32) are narrowed for fixing a tool in the clamping jaws (31).

7. Clamping mechanism according to any one of the preceding claims, **characterised in that** the clamping head part (29) is conical with correspondingly constructed sloping outer surfaces (36), the clamping tube part (12) preferably having correspondingly conically constructed, sloping inner surfaces (14) and the clamping head part engages directly on the clamping tube part.

8. Clamping mechanism according to any one of the preceding claims, **characterised in that** the angle of the sloping outer surfaces (36) of the clamping head part (29) corresponds to the angle of the sloping outer surfaces (51) of the support element (50) and on axially moving the clamping head part, the latter or the clamping jaws (31) run between the parallel slopes of the inner surface (14) of the clamping tube part (12) and the outer surface (51) of the support element without a radial tilting away from or towards the longitudinal axis.

9. Clamping mechanism according to any one of the preceding claims, **characterised in that** the movement-permitting connecting means (34) are elastic, in particular a rubbery material and are vulcanised between the clamping jaws (31) for elastic, undetachable connection.

10. Clamping mechanism according to any one of the preceding claims, **characterised in that** the clamping head part (31) by means of the connecting means (34) is present in one position as the normal position without force action and this normal position is preferably the narrowed position.

11. Clamping mechanism according to any one of the preceding claims, **characterised by** elastic clamping means (42) maintaining the clamping head part (29) in a predetermined position, in particular the narrowed position, wherein said means preferably have an elastic rubber ring (42), which is arranged circumferentially in the tapered area of the clamping head part.

## Revendications

1. Dispositif de serrage (11) pour outils, en particulier foret ou fraise, comportant une partie tube de serrage (12) et une partie tête de serrage (29) susceptible d'être agencée dans celle-ci, la partie tête de serrage présentant sur son côté intérieur des surfaces de serrage (32) pour les outils et présentant une forme allant en se rétrécissant dans la direction du dispositif de serrage et pourvue de surfaces extérieures inclinées (36) qui sont guidées sur des surfaces intérieures (14) inclinées en correspondance de la partie tube de serrage (12), et la partie tête de serrage étant subdivisée en mâchoires de serrage individuelles (31) par des fentes longitudinales (30) réparties à la périphérie et continues dans la direction radiale et dans la direction axiale, lesdites mâchoires étant reliées à des moyens de liaison (34) permettant un mouvement, de préférence à des moyens de liaison élastiques, la partie tête de serrage et la partie tube de serrage étant accouplées l'une à l'autre sur le côté extérieur de la partie tête de serrage au moyen d'un dispositif d'accouplement (16) à coopération de formes dans la direction axiale et détachable dans la direction radiale, la partie tête de serrage étant modifiable vis-à-vis de sa périphérie extérieure au moins dans la zone rétrécie à l'aide des moyens de liaison permettant un mouvement, pour passer d'une position élargie dans laquelle le dispositif d'accouplement (16) est accouplé, jusque dans une position contractée dans laquelle la partie tête de serrage est désaccouplée du dispositif d'accouplement, **caractérisé par** au moins un élément d'appui (50) qui est susceptible d'être amené dans la zone rétrécie de la partie tête de serrage (29) et qui maintient la partie tête de serrage bloquée dans la position élargie pour éviter une contraction ou un basculement des mâchoires de serrage (31) depuis l'axe longitudinal.

2. Dispositif de serrage selon la revendication 1, **caractérisé en ce que** l'élément d'appui (50) est agencé dans un passage intérieur (44) de la partie tête de serrage (29) dans la zone du dispositif d'accouplement (16), l'élément d'appui étant de préférence susceptible d'être relié à la partie tube de serrage (12).

3. Dispositif de serrage selon la revendication 1 ou 2, **caractérisé en ce que** l'élément d'appui (50) fait écarter la partie tête de serrage (29) dans la position élargie, par un mouvement dans la direction axiale, de préférence vers la partie tube de serrage (12), et à cet effet l'élément d'appui est rétréci dans la direction de mouvement, et le passage intérieur (44) de la partie tête de serrage comprend une pente intérieure correspondante (45) pour le guidage.

4. Dispositif de serrage selon l'une des revendications précédentes, **caractérisé en ce que** l'élément d'appui (50) est susceptible d'être vissé sur la partie tube de serrage (12) au moyen d'une vis (53) en particulier le long de l'axe longitudinal, la vis étant accessible de préférence à travers l'espace (44) entre les surfaces de serrage (32) à partir du côté avant de la partie tête de serrage (29).

5. Dispositif de serrage selon l'une des revendications précédentes, **caractérisé en ce que** l'élément d'appui (50) est monté de façon imperdable dans un espace (44) entre les mâchoires de serrage (31), en étant de préférence mobile au moins axialement.

6. Dispositif de serrage selon l'une des revendications précédentes, **caractérisé en ce que** la partie tête de serrage (29) est mobile par rapport à la partie tube de serrage (12) dans la direction axiale au moyen du dispositif d'accouplement (16), et grâce au guidage ou à l'appui des surfaces extérieures inclinées (51) de la partie tête de serrage contre les surfaces intérieures inclinées en correspondance (45) de la partie tube de serrage, la partie tête de serrage est contractée dans la direction radiale et ainsi les surfaces de serrage (32) sont contractées pour serrer un outil dans les mâchoires de serrage (31).

7. Dispositif de serrage selon l'une des revendications précédentes, **caractérisé en ce que** la partie tête de serrage (29) présente une forme conique avec des surfaces extérieures inclinées (36) réalisées en correspondance, la partie tube de serrage (12) présentant de préférence des surfaces intérieures inclinées (14) réalisées coniques en correspondance et la partie tête de serrage s'applique directement contre la partie tube de serrage.

8. Dispositif de serrage selon l'une des revendications précédentes, **caractérisé en ce que** l'angle de l'inclinaison (36) de la partie tête de serrage (29) correspond à l'angle de l'inclinaison (51) de l'élément d'appui (50), et lors du mouvement de la partie tête de serrage dans la direction axiale, la partie tête de serrage ou les mâchoires (31) s'étendent entre les pentes parallèles de la surface intérieure (14) de la partie tube de serrage (12) et de la surface extérieure (51) de l'élément d'appui, sans basculement dans la direction radiale en éloignement de l'axe longitudinal ou vers celui-ci.

9. Dispositif de serrage selon l'une des revendications précédentes, **caractérisé en ce que** les moyens de liaison (34) permettant un mouvement sont élastiques, en particulier une pâte présentant l'élasticité du caoutchouc qui est vulcanisée entre les mâchoires de serrage (31) pour établir la liaison élastique et non détachable.

10. Dispositif de serrage selon l'une des revendications précédentes, **caractérisé en ce qu'**à l'aide des moyens de liaison (34), la partie tête de serrage (31) se présente dans une position comme position de base sans action d'une force, cette position de base étant de préférence la position contractée.

11. Dispositif de serrage selon l'une des revendications précédentes, **caractérisé par** des moyens de serrage élastiques (42) qui maintiennent la partie tête de serrage (29) dans une position prédéterminée, en particulier dans la position contractée, et qui comprennent de préférence un anneau élastique en caoutchouc (42) qui est agencé sur le pourtour dans la zone rétrécie de la partie tête de serrage.
